# FASCICULE DE BREVET EUROPEEN

(11) **EP 2 892 754 B1**
(45) Date de publication et mention de la délivrance du brevet: **01.05.2019**
(21) Numéro de dépôt: 13759743.1
(22) Date de dépôt: 10.09.2013
(51) Int. Cl.: B60L 3/04, B60L 3/00, B60L 50/51, B60L 58/18, B60L 58/21, B60L 58/13, H02J 7/00, B60L 15/38, B60L 50/60, B60L 58/14, H02J 7/02

(54) **PROCEDE ET DISPOSITIF DE GESTION D'ENSEMBLES DE STOCKAGE D'ENERGIE ELECTRIQUE POUR L'ALIMENTATION ELECTRIQUE D'UN VEHICULE A MOTEUR ELECTRIQUE**
STEUERUNGSVERFAHREN UND VORRICHTUNG FÜR ENERGIESPEICHERANORDNUNGEN EINES ELEKTRISCHEN FAHRZEUGS
CONTROL METHOD AND APPARATUS FOR ENERGY STORAGE ASSEMBLIES OF AN ELECTRIC MOTOR VEHICLE

(30) Priorité: 10.09.2012 FR 1258461
(43) Date de publication de la demande: 15.07.2015
(73) Titulaire: Blue Solutions, 29500 Ergué Gabéric (FR)
(72) Inventeur: JESTIN, Jean-Jacques, F-29170 Fouesnant (FR); COLIN, Jacques, F-29000 Quimper (FR)
(74) Mandataire: Regimbeau
(86) Numéro de dépôt international: PCT/EP2013/068654
(87) Numéro de publication internationale: WO 2014/037572

(56) Documents cités:
- EP-A1- 2 404 801
- DE-A1-102011 011 799
- US-A1- 2007 247 106
- US-A1- 2010 315 043

## Description

### DOMAINE TECHNIQUE

La présente invention concerne le domaine technique général des ensembles de stockage d'énergie électrique.

Plus particulièrement l'invention concerne le domaine des modules comprenant au moins deux ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant deux électrodes, un électrolyte et un séparateur), soit une batterie de type batterie au lithium (i.e. un système comprenant une anode, une cathode et un électrolyte entre l'anode et la cathode).

### PRESENTATION GENERALE DE L'ART ANTERIEUR

On connaît des modules, également appelés pack batterie comprenant un boîtier dans lequel sont disposés plusieurs ensembles de stockage d'énergie électrique, qui sont des cellules élémentaires de batterie, reliées en série par des moyens de connexion.

Ces modules comprennent également une carte électronique de gestion notamment pour la gestion de la charge et de la décharge des ensembles de stockage d'énergie électrique ou la sécurité au sein du module.

Le module peut être utilisé pour alimenter électriquement un véhicule à moteur électrique tel qu'un bus, un camion ou une voiture. Pour ce faire, le véhicule comprend, en aval des batteries, un variateur permettant de faire varier la puissance transmise au moteur en fonction de commandes externes, provenant notamment de l'utilisateur.

Chaque véhicule peut comprendre une pluralité de modules connectés en parallèle, ceci étant notamment valable lorsque les besoins en puissance du véhicule sont élevés.

Une des difficultés actuelles concerne la gestion du fonctionnement de ces modules, notamment lorsque les caractéristiques des modules divergent en raison d'un dysfonctionnement, ponctuel ou non, d'un des packs batterie.

Le document DE 10 2011 011 799 décrit un procédé de contrôle du fonctionnement de l'alimentation électrique d'un véhicule électrique. Ce véhicule comprend plusieurs cellules de stockage d'énergie et/ou plusieurs brins de stockage d'énergie, qui forment ensemble un dispositif, tel qu'une batterie.

Même si ce document Prévoit la possibilité de désactiver une partie des brins de stockage défectueux ou un brin contenant une cellule défectueuse, il n'est pas prévu de le faire après que la puissance minimale ait été diminuée, et ce par un contrôleur de puissance. Or ceci présente des avantages décrits ultérieurement.

Un but de la présente invention est de proposer un procédé et un système permettant de contrôler le fonctionnement des modules de stockage d'énergie électrique d'un véhicule à moteur électrique comprenant au moins deux modules de stockage d'énergie électrique connectés en parallèle.

### PRESENTATION DE L'INVENTION

A cet effet on prévoit un procédé de contrôle du fonctionnement de l'alimentation électrique d'un véhicule à moteur électrique comprenant au moins deux modules de stockage d'énergie connectés en parallèle, lesdits modules étant aptes à fournir au moteur une puissance électrique délivrée comprise entre une puissance minimale prédéterminée et une puissance maximale prédéterminée, remarquable en ce que le procédé comprend les étapes selon la revendication indépendante 1.

Le véhicule comprend un contrôleur de puissance permettant de contrôler la puissance délivrée par les modules en fonction d'une commande d'un utilisateur, la puissance maximale correspondant à une puissance de seuil du contrôleur, la diminution de la puissance maximale étant effectuée par commande du contrôleur de puissance.

Ainsi, lorsque le véhicule est en fonctionnement, on permet la déconnexion d'un module de stockage d'énergie défectueux sans devoir arrêter le véhicule.

Cela permet :
- une grande sécurité d'une part, notamment en limitant les risques de dégradation des modules de stockage d'énergie suite à un échange important de courant entre les modules de stockage d'énergie,
- une bonne flexibilité d'utilisation pour l'utilisateur d'autre part, notamment en autorisant la déconnexion électrique d'un module de stockage d'énergie sans obligation pour l'utilisateur d'arrêter le véhicule électrique.

Le fait de limiter la puissance maximale accordée au moteur préalablement à la déconnexion du module de stockage d'énergie permet :
- d'éviter de mettre le véhicule en difficulté si l'utilisateur demande une très grande puissance au moment de la déconnexion, ce qui risquerait de créer des dégâts au niveau du mécanisme de déconnexion (contacteurs de puissance),
- d'empêcher que la déconnexion du module de stockage d'énergie défectueux ne soit différée trop longtemps.

Des aspects préférés mais non limitatifs du dispositif selon l'invention sont les suivants :
- l'étape de diminution peut comprendre les sous-étapes consistant à :
   ∘ commander la diminution de la puissance maximale pouvant être fournie par les modules, puis
   ∘ attendre une période de temps prédéterminée avant la mise en oeuvre de l'étape de déconnexion ;
   le fait de commander la déconnexion du module défectueux après une période de temps prédéterminée permet de garantir que la puissance maximale accordée au moteur est bien diminuée lorsque l'étape de déconnexion du module est mise en oeuvre,
- en variante, l'étape de diminution peut comprendre les sous-étapes consistant à :
   ∘ commander la diminution de la puissance maximale pouvant être fournie par les modules, puis
   ∘ acquérir au moins un paramètre lié à la puissance du moteur,
   ∘ vérifier que ledit et au moins un paramètre satisfait un critère de diminution de puissance :
      ▪ si ledit critère de diminution de puissance est satisfait, alors mettre en oeuvre l'étape de déconnexion,
      ▪ sinon, retourner à l'étape d'acquisition dudit et au moins un paramètre lié à la puissance du moteur ;
   le paramètre lié à la puissance du moteur peut être par exemple la puissance du moteur, la vitesse de déplacement du véhicule, l'intensité du courant traversant le moteur ou le variateur, etc. ;
   le fait de conditionner la déconnexion du module défectueux à la satisfaction d'un critère permet d'une part de s'assurer que la puissance maximale accordée au moteur a bien été diminuée avant de mettre en oeuvre la déconnexion du module, et d'autre part de limiter la durée entre la diminution effective de la puissance maximale et la déconnexion du module défectueux ;
- l'étape de détection peut comprendre, pour chaque module, les sous-étapes suivantes :
   ∘ acquérir au moins un paramètre représentatif de caractéristiques du module considéré, et
   ∘ pour au moins un paramètre, comparer la valeur du paramètre à au moins une valeur seuil prédéterminée pour identifier une éventuelle anomalie de fonctionnement du module considéré ;
   le paramètre représentatif de caractéristiques du module peut être par exemple la tension aux bornes du module ou l'intensité électrique le traversant, la température du module, etc. ;
   Une anomalie peut être détectée si un paramètre dépasse une valeur de seuil ou si une combinaison particulière de paramètres dépassant la valeur de seuil ou non est obtenue ;
- le procédé comprend en outre une étape d'augmentation de la puissance maximale pouvant être fournie par les modules, ladite étape d'augmentation étant mise en oeuvre après l'étape de déconnexion. Cette étape, comme toute étape de diminution ou d'augmentation de la puissance, est notamment obtenue en commandant le contrôleur de puissance ;
   ceci permet à l'utilisateur d'utiliser son véhicule normalement après la déconnexion du module défectueux ;
- le procédé comprend en outre une étape de transmission d'un signal d'alerte à un avertisseur sonore ou visuel du véhicule pour informer l'utilisateur de l'anomalie et/ou de la déconnexion;
   ceci permet d'informer l'utilisateur de l'anomalie afin qu'il prenne les mesures adaptées à sa prochaine éventuelle perte de vitesse,
- l'étape de diminution consiste à faire décroître en continu la puissance maximale pouvant être fournie par les modules, de sorte que la variation de puissance maximale soit progressive, notamment linéaire ;
   ceci permet d'éviter une chute brutale de la vitesse de déplacement du véhicule et donc limite les risques d'accidents,
- le procédé comprend en outre une étape d'attente d'une durée prédéterminée entre l'étape de détection et l'étape de diminution ;
   cette temporisation permet de laisser à l'utilisateur le temps suffisant pour adapter sa conduite à sa prochaine éventuelle perte de vitesse,
- le procédé comprend, lors d'au moins un démarrage du véhicule, une étape de pré-charge du contrôleur de puissance, tel qu'un variateur, permettant de contrôler la puissance délivrée par les modules en fonction d'une commande d'un utilisateur, ladite étape de pré-charge comportant la connexion électrique du contrôleur de puissance à un module donné de sorte à augmenter la tension aux bornes du contrôleur de puissance préalablement à sa connexion à l'ensemble des modules ;
   l'étape de pré-charge permet de limiter les risques de dégradation du contrôleur de puissance en faisant monter la tension à ses bornes à une valeur proche de la tension aux bornes du module donné ;
- l'étape de pré-charge comprend une sous-étape consistant à sélectionner un module donné différent à chaque démarrage du véhicule ;
   le fait d'utiliser un module différent à chaque démarrage pour mettre en oeuvre l'étape de pré-charge permet de limiter les risques de dégradation d'un module particulier et permet d'homogénéiser le vieillissement des différents modules ;
- l'étape de pré-charge comprend, préalablement à la sous-étape de sélection d'un module donné différent, une sous-étape consistant à déterminer un groupe de modules détectés défectueux lors de démarrage précédent du véhicule, la sous-étape de sélection consistant à sélectionner un module donné parmi les modules n'appartenant pas au groupe de modules détectés défectueux,
- au moins un module de stockage d'énergie, notamment chaque module de stockage, comprend une pluralité de cellules élémentaires de batterie reliées en série.

L'invention concerne également un système de contrôle du fonctionnement de l'alimentation électrique d'un véhicule à moteur électrique comprenant au moins deux modules de stockage d'énergie connectés en parallèle, lesdits modules étant aptes à fournir au moteur une puissance électrique délivrée comprise entre une puissance minimale prédéterminée et une puissance maximale prédéterminée, le système comprenant :
- des moyens de détection d'une anomalie de fonctionnement d'au moins un module défectueux,
- des moyens de diminution de la puissance maximale pouvant être fournie par les modules, de sorte que la puissance maximale demeure strictement supérieure à une puissance nulle,
- des moyens de déconnexion de chaque module défectueux.

Le système selon l'invention est programmé pour mettre en oeuvre les étapes du procédé décrit précédemment grâce notamment à une unité de traitement.

Le système selon l'invention comprend également un contrôleur de puissance permettant de contrôler la puissance délivrée par les modules en fonction d'une commande d'un utilisateur, la puissance maximale correspondant à une puissance de seuil du contrôleur, les moyens de diminution de la puissance maximale comprenant des moyens de commande du contrôleur de puissance.

L'invention concerne également un produit programme d'ordinateur comprenant des instructions de code programme enregistrées sur un support utilisable dans un ordinateur, remarquable en ce qu'il comprend des instructions pour la mise en oeuvre du procédé décrit précédemment.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre schématiquement un véhicule à moteur électrique,
- la figure 2 illustre un exemple de procédé de contrôle de l'alimentation d'un véhicule à moteur électrique,
- la figure 3 illustre partiellement des éléments composant un véhicule à moteur électrique,
- la figure 4 illustre schématiquement une unité de stockage d'énergie électrique.

### DESCRIPTION DE L'INVENTION

On va maintenant décrire différents modes de réalisation du module selon l'invention en référence aux figures. Dans ces différentes figures, les éléments équivalents portent les mêmes références numériques.

### 1. Principe général de fonctionnement

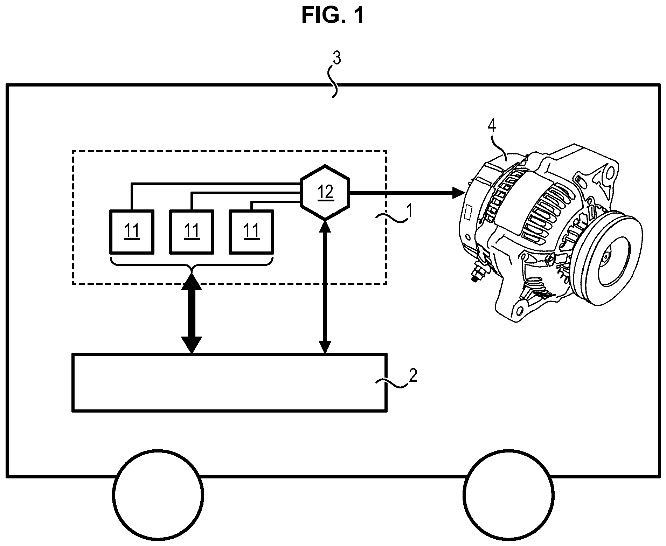

En référence à la figure 1, on a illustré un exemple de système de contrôle 2 du fonctionnement de l'alimentation électrique d'un véhicule 3 à moteur électrique 4.

Le véhicule 3 comprend une unité de stockage d'énergie électrique 1 incluant :
- trois modules 11 de stockage d'énergie électrique montés en parallèle, et
- un contrôleur de puissance 12 monté en série avec les trois modules 11, en aval de ces trois modules.

Chaque module 11 comporte une pluralité d'ensembles de stockage d'énergie électrique 11 - de type batterie - permettant le stockage d'énergie électrique pour sa restitution ultérieure au moteur électrique 4 du véhicule 3. Le contrôleur de puissance est adapté pour contrôler la puissance délivrée au moteur électrique en fonction d'une commande de l'utilisateur, la valeur de la puissance délivrée par les modules pouvant varier entre une valeur de puissance minimale prédéterminée (puissance nulle) et une valeur de puissance maximale prédéterminée et réglable.

Le véhicule 3 comprend également une unité de traitement 2 connectée aux modules 11. L'unité de traitement 2 comprend par exemple un/des ordinateur(s), un/des processeur(s), un/des microcontrôleur(s), un/des micro-ordinateur(s), un/des automate(s) programmable(s), un/des circuit(s) intégré(s) spécifique(s) d'application, ou d'autres dispositifs connus de l'homme du métier.

L'unité de traitement 2 permet de piloter le fonctionnement de l'unité de stockage d'énergie électrique 1. L'unité de traitement 2 permet notamment le pilotage de la charge et de la décharge des modules 11, ainsi que le diagnostic des modules 11. L'unité de traitement permet également de piloter le contrôleur de puissance. En particulier, l'unité de traitement est apte à configurer le contrôleur de puissance, notamment en faisant varier la valeur de la puissance de seuil du contrôleur, soit la puissance maximale pouvant être fournie par les modules 11, et donc la puissance maximale pouvant être requise par le moteur électrique 4. La communication de l'unité de traitement avec les modules 11 est directe alors que la communication avec le contrôleur de puissance est indirecte, via un superviseur, comme on le verra par la suite.

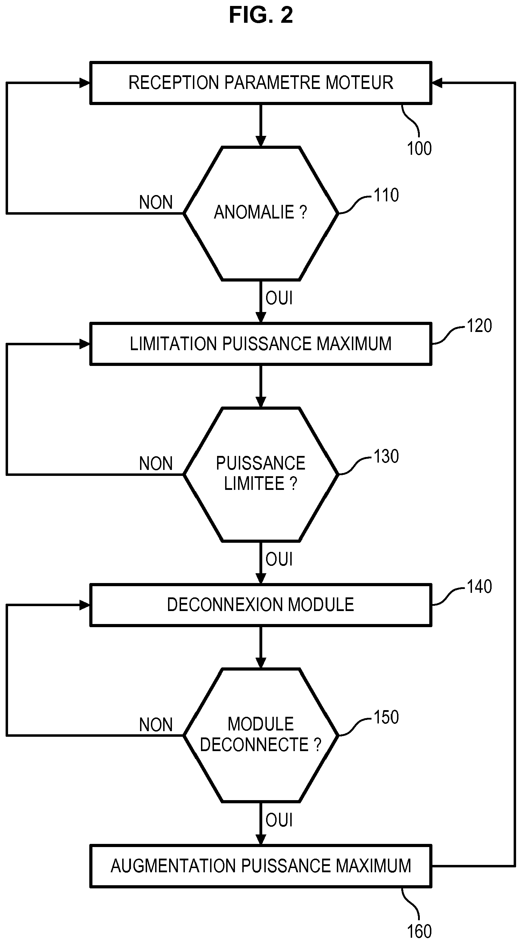

L'unité de traitement 2 est programmée pour mettre en oeuvre le procédé illustré à la figure 2. Le principe de fonctionnement de l'unité de traitement 2 est le suivant.

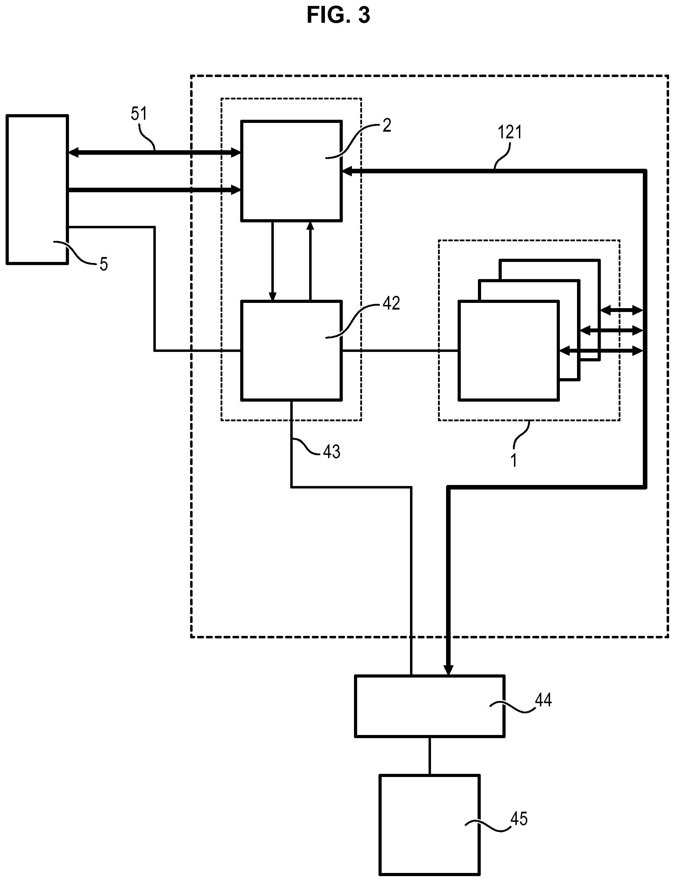

Au cours du fonctionnement du véhicule électrique 3, l'unité de traitement 2 surveille (étapes 100, 110) les anomalies éventuelles des modules 11. Cette phase de surveillance de la survenue d'éventuelles anomalies sera décrite plus en détail dans la suite en référence à la figure 3.

Lorsque l'unité de traitement ne détecte pas d'anomalie, la puissance maximale pouvant être délivrée par les modules 11 est égale à une valeur initiale.

Lorsque l'unité de traitement 2 détecte une anomalie sur un module 11, l'unité de traitement 2 commande, au contrôleur de puissance 12, la limitation de la puissance maximale pouvant être délivrée par les modules 11 (étapes 120, 130). Plus précisément, l'unité de traitement 2 remplace la valeur initiale de la puissance maximale par une valeur limitée inférieure à la valeur initiale tout en étant différente d'une puissance nulle, ce qui a une influence sur la vitesse maximale du véhicule.

Une fois la valeur de la puissance maximale diminuée, l'unité de traitement 2 commande la déconnexion du module 11 défectueux (étape 140). Le fait de limiter la puissance accordée au moteur préalablement à la déconnexion du module 11 défectueux permet :
- d'éviter les risques de dégradation des autres modules 11, notamment en cas d'échange important de courant électrique entre les modules 11 lors de la déconnexion du module 11 défectueux,
- de ne pas mettre le véhicule en difficulté, notamment si l'utilisateur demande une très grande puissance aux modules 11 au moment de la déconnexion, ce qui risquerait de créer des dégâts au niveau du mécanisme de déconnexion (interrupteurs commandés etc.), et
- de limiter la durée entre la détection d'une avarie sur un module 11 et la déconnexion du module 11 défectueux.

Ainsi, l'unité de traitement 2 décrite ci-dessus permet la déconnexion d'un module 11 défectueux sans nécessiter un arrêt du véhicule 3.

La déconnexion du module 11 défectueux (i.e. passage de l'étape de diminution de la puissance maximale à l'étape de déconnexion du module) peut intervenir lorsqu'un critère de déconnexion est satisfait.

Par exemple dans un mode de réalisation, l'unité de traitement 2 comprend un capteur permettant de mesurer un (ou plusieurs) paramètre(s) - dénommé(s) « paramètre de fonctionnement » - lié(s) à la puissance du moteur 4. Cette mesure permet de détecter une diminution de la puissance maximale accordée au moteur 4. Lorsque la (les) valeur(s) de ce(s) paramètre(s) de fonctionnement indique(nt) à l'unité de traitement 2 que la puissance maximale fournie par les modules 11 a été diminuée, l'unité de traitement 2 met en oeuvre la déconnexion du module défectueux 11 (étape 140). Ceci permet de garantir que la diminution de la puissance maximale accordée au moteur est effective préalablement à la déconnexion du module 11.

En variante, la déconnexion du module défectueux 1 peut être commandée suite à une période de temps prédéterminée.

Par exemple dans un mode de réalisation, la déconnexion du module 11 défectueux par l'unité de traitement 2 est mise en oeuvre après une période de temps prédéterminée à partir de la détection de l'anomalie. Ceci permet de garantir que la déconnexion du module 11 est réalisée après la diminution de la puissance maximale d'une part, et de limiter le nombre de capteurs utilisés par l'unité de traitement 2 d'autre part.

Après la déconnexion électrique du module défectueux 11, l'unité de traitement 2 peut être programmée pour rétablir la valeur initiale de la puissance maximale allouée au moteur 4 (étape 160). Plus précisément, après la déconnexion du module défectueux, l'unité de traitement 2 remplace la valeur limitée de la puissance maximale accordée au moteur 4 (puissance de seuil du contrôleur de puissance) par la valeur initiale de puissance. L'utilisateur peut alors utiliser son véhicule 3 normalement suite à la déconnexion.

Cette variante de réalisation est notamment réalisée lorsque le véhicule comprend au moins trois modules de stockage d'énergie électrique 1 connectés en parallèle.

Dans un exemple de réalisation, l'unité de traitement 2 peut remplacer la première valeur limitée de puissance maximale par une deuxième valeur limitée de puissance maximale :
- supérieure à la valeur de puissance limitée et
- inférieure ou égale à la valeur initiale.

Optionnellement, l'unité de traitement 2 peut informer l'utilisateur de la détection d'une anomalie sur l'un des modules 11. Pour informer l'utilisateur, l'unité de traitement 2 peut transmettre des informations sur des moyens d'affichage ou des moyens d'émission de signaux sonores.

L'unité de traitement 2 peut également transmettre un message à l'utilisateur, lui indiquant le problème détecté et les actions qui vont être menées pour résoudre ce problème. Le message peut être transmis par l'intermédiaire du tableau de bord du véhicule (ordinateur de bord, voyant...) sous forme visuelle et/ou auditive.

Avantageusement, la déconnexion du module défectueux 11 par l'unité de traitement 2 peut être mise en oeuvre après une période de temps donnée à partir de la transmission du message à l'utilisateur. Ceci permet à l'utilisateur de prendre des mesures adaptées au vu de sa prochaine éventuelle perte de vitesse.

### 2. Phase de détection d'anomalie

En référence à la figure 3, on a illustré de manière fonctionnelle certains éléments d'un véhicule à moteur électrique.

Le véhicule comporte un superviseur 5, une unité de traitement 2 et une unité de stockage d'énergie électrique 1.

Le superviseur 5 permet de piloter l'unité de traitement 2 qui effectue la gestion de l'unité de stockage d'énergie 1 et communique avec les différents organes du véhicule, comme par exemple le moteur électrique, le tableau de bord et le contrôleur de puissance 12 par l'intermédiaire d'au moins un bus de communication. En d'autres termes, le superviseur supervise et communique avec tous les organes du véhicule, à l'exception des modules de stockage d'énergie 1, pilotés directement par l'unité de traitement 2.

L'unité de stockage 1 comporte notamment trois modules 11 montés en parallèle. Les modules 11 permettent le stockage de l'énergie électrique. Ils sont reliés au moteur électrique 4 par l'intermédiaire d'une liaison de puissance 41 et d'une zone d'interconnexion technique 42. Les modules 11 sont de plus reliés par l'intermédiaire d'une liaison de puissance 43 à un connecteur électrique 44. Ce connecteur électrique 44 est destiné à être raccordé à un chargeur externe 45 afin de permettre l'alimentation électrique des modules 11. Les modules 11 sont également connectés à l'unité de traitement 2.

L'unité de traitement 2 est connectée :
- au superviseur 5 par l'intermédiaire d'un premier bus de communication 51 tel qu'un bus de « réseau de zone de contrôleur » (ou bus « CAN », acronyme de l'expression anglo-saxonne « Controller Area Network »).
- aux modules 11 par l'intermédiaire d'un deuxième bus de communication 121.

L'unité de traitement 2 est adaptée pour détecter une (ou plusieurs) anomalie(s) survenant sur l'un (ou plusieurs) des modules 11.

Plus précisément, l'unité de traitement 2 est apte à :
- obtenir des informations de chacun des modules 11 et d'autres éléments du véhicule via le superviseur et le premier bus de communication CAN, et
- émettre en fonction de ces informations des commandes :
   ∘ vers l'unité de stockage 1 pour diminuer la puissance maximale accordée au moteur 4, déconnecter un module 11 défectueux, etc., et
   ∘ vers le véhicule 3 pour avertir l'utilisateur d'une défaillance d'un module 11 défectueux, etc.

Le (ou les) paramètre(s) de fonctionnement en fonction duquel/desquels l'unité de traitement 2 est apte à détecter une (ou plusieurs) anomalie(s) peuvent être compris dans la liste suivante :
- la tension aux bornes des modules 11,
- l'intensité traversant les modules 11,
- la température des modules 11,
- la caractéristique des signaux parvenant au superviseur 5 (par exemple demande d'arrêt d'urgence),
- les caractéristiques électriques d'au moins un composant des modules 11.

Le (ou les) paramètre(s) de déconnexion en fonction duquel/desquels l'unité de traitement 2 est apte à déclencher la déconnexion du (ou des) module(s) 11 défectueux peuvent être compris dans la liste suivante :
- puissance du moteur 4,
- vitesse du véhicule 3,
- courant traversant un organe électrique, notamment du contrôleur de puissance 12, etc.

Le principe de fonctionnement de l'unité de traitement 2 est le suivant.

Au cours de l'utilisation du véhicule, l'unité de traitement 2 effectue une surveillance de l'état de fonctionnement des modules 11.

Notamment, l'unité de traitement 2 acquiert un (ou des) paramètre(s) de fonctionnement, mesurés par exemple in situ dans les modules 11 par des capteurs adaptés tels que des capteurs de tension, de courant, de température, etc., via le premier bus de communication CAN 51 et/ou le deuxième bus de communication 121. Chaque paramètre de fonctionnement acquis est comparé à une valeur seuil par l'unité de traitement 2.

Si le résultat de la comparaison satisfait un critère de fonctionnement normal, alors aucun des modules 11 n'est défectueux. Par exemple, si la température des modules 11 est inférieure à une température limite prédéterminée stockée en mémoire, alors les modules 11 sont en état de fonctionnement normal. L'unité de traitement 2 continue l'acquisition et la comparaison du (des) paramètre(s) de fonctionnement à la (aux) valeur(s) seuil.

Lorsque le résultat de la comparaison ne satisfait pas le critère de fonctionnement normal, alors un des modules 11 est défectueux. Par exemple, si la température d'un module 11 dépasse la température limite prédéterminée stockée en mémoire, alors ce module 11 est défectueux.

L'unité de traitement 2 transmet au superviseur 5 via le premier bus de communication, un signal d'information pour éventuellement avertir l'utilisateur du dysfonctionnement. L'unité de traitement 2 transmet au contrôleur de puissance 12 via le premier bus de communication 51, un signal de commande pour diminuer la puissance maximum délivrée par les modules.

L'unité de traitement 2 vérifie si la diminution de la puissance maximum accordée au moteur est effective ou non. Pour ce faire, l'unité de traitement 2 acquiert un (ou plusieurs) paramètre(s) de déconnexion. Chaque paramètre de déconnexion acquis est comparé à une valeur seuil pour vérifier qu'un critère relatif à la diminution de la puissance maximale accordée au moteur est satisfait. Par exemple, l'unité de traitement 2 acquiert la vitesse de déplacement du véhicule, un courant ou une puissance du moteur, et la compare à une valeur de consigne.

Si ce critère n'est pas satisfait, l'unité de traitement 2 ne commande pas la déconnexion du module défectueux et recommence l'acquisition du (ou des) paramètre(s) de déconnexion, après une temporisation.

Si ce critère est satisfait, l'unité de traitement 2 commande la déconnexion du module défectueux. Plus précisément, l'unité de traitement 2 transmet à l'unité de stockage 1 via le deuxième bus de communication 121, un signal de déconnexion pour déconnecter le module défectueux 11.

Une fois le module défectueux 11 déconnecté, l'unité de traitement 2 peut commander l'augmentation de la puissance maximale délivrée par les modules 11. Plus précisément, l'unité de traitement 2 transmet au contrôleur de puissance 12 via le premier bus de communication 51 et le superviseur, un signal de commande pour augmenter la valeur de la puissance maximum accordée au moteur (puissance de seuil du contrôleur).

### 3. Phase de déconnexion d'un module défectueux

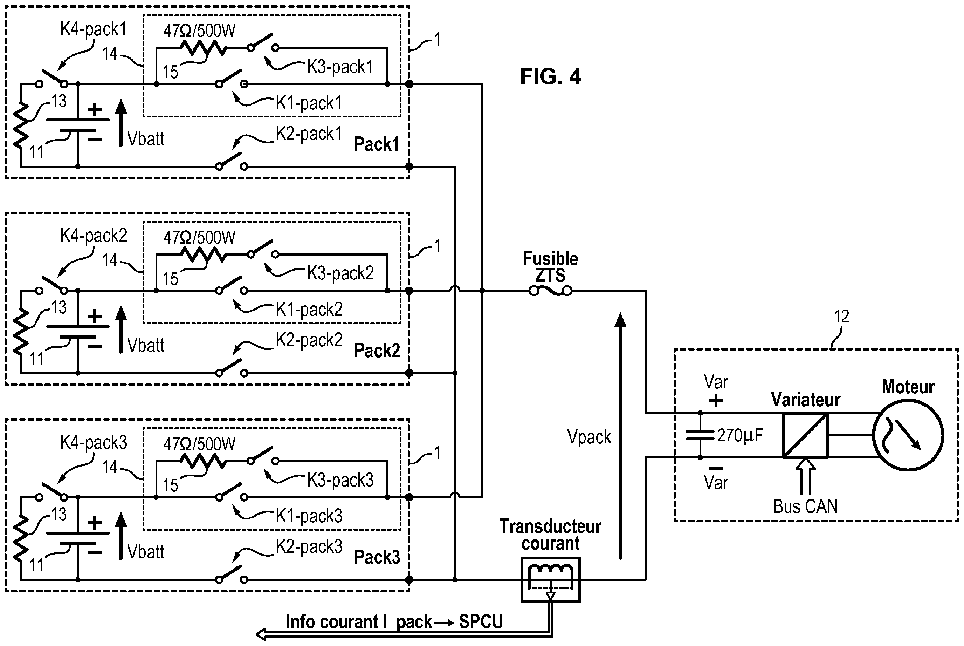

En référence à la figure 4, on a illustré plus en détail un exemple d'unité de stockage d'énergie électrique 1. Cette unité de stockage d'énergie électrique 1 comprend trois modules 11 connectés en parallèle et un contrôleur de puissance 12.

Chaque module 11 comprend une pluralité d'ensemble de stockage d'énergie électrique (non représentés) connectés les uns aux autres en série. Chaque module 11 est associé à :
- un interrupteur commandé K2 connecté à la borne positive du module,
- une unité de chauffe branchée en parallèle du module 11, l'unité de chauffe comportant une résistance électrique de chauffe 13 montée en série d'un interrupteur commandé K4,
- un circuit de pré-charge 14 connecté à la borne positive du module, le circuit de pré-charge 14 comportant :
   ∘ une unité de pré-charge composée d'une résistance électrique de pré-charge 15 connectée en série d'un interrupteur commandé K3, et
   ∘ un interrupteur commandé K1 monté en parallèle de l'unité de pré-charge 14.

Les trois modules 11 montés en parallèle sont également reliés électriquement au contrôleur de puissance 12.

Le contrôleur de puissance 12 permet de faire varier la puissance envoyée au moteur entre une puissance nulle et une puissance maximale. Cette puissance envoyée au moteur est fonction de la puissance requise par l'utilisateur (par exemple en appuyant sur une pédale d'accélérateur du véhicule).

Dans le mode de réalisation illustré à la figure 4, le contrôleur de puissance 12 comprend un condensateur monté en parallèle d'un variateur. Le condensateur permet le filtrage des signaux envoyés au variateur. Le variateur permet de faire varier la puissance envoyée au moteur en fonction de l'utilisation du véhicule.

L'unité de traitement 2 est connectée au contrôleur de puissance 12 par l'intermédiaire du premier bus de communication 51. Ceci permet à l'unité de traitement de diminuer/augmenter la valeur de la puissance maximum définie dans le contrôleur de puissance.

Dans un mode de réalisation, l'unité de traitement 2 est adaptée pour diminuer (respectivement augmenter) linéairement la valeur de la puissance maximale définie dans le contrôleur de puissance. Pour ce faire, l'unité de traitement transmet au contrôleur de puissance via le premier réseau de communication une pluralité de signaux intermédiaires correspondant à des valeurs intermédiaires de puissance maximum. Les valeurs des signaux intermédiaires successifs sont :
- décroissantes dans le cas d'une diminution progressive de la puissance maximale accordable au moteur, ou
- croissantes dans le cas d'une augmentation de la puissance maximale accordable au moteur.

On va maintenant décrire plus en détail le principe de connexion/déconnexion des modules.

### Contrôle d'autorisation de démarrage

Avant toute connexion des modules 11 au moteur, l'unité de traitement vérifie qu'il n'y a pas de divergence entre la tension des différents modules 11. Si l'écart de tension entre les différents modules fait partie d'une plage de valeurs autorisée, l'unité de traitement et/ou le superviseur autorise le démarrage du véhicule. Dans le cas contraire, le démarrage du véhicule n'est pas autorisé et l'unité de traitement indique à l'utilisateur via le superviseur que la charge du véhicule doit reprendre.

### Phase de pré-charge

Une fois le démarrage du véhicule autorisé et avant de connecter les différents modules 11, une phase de pré-charge est mise en oeuvre durant laquelle :
- pour un module donné, les interrupteurs (i.e. contacteurs de puissance) K3 et K2 sont fermés et l'interrupteur K1 est ouvert,
- pour les autres modules, les interrupteurs K1, K2, K3 sont ouverts.

L'unité de traitement mesure la tension Vbatt aux bornes du module donné, et la tension Vpack aux bornes du contrôleur de puissance. Lorsque certains critères sont satisfaits (par exemple, Vpack > 95% de Vbatt, et Ipack < 2A), la pré-charge est considérée terminée. Cette étape de pré-charge permet de monter la tension aux bornes du condensateur de filtrage (et du variateur), au même niveau que celle du module donné pour éviter les courants forts et destructifs lors de la connexion des autres modules.

Un seul des modules pourrait comporter le circuit de pré-charge 14, et être utilisé pour la mise en oeuvre de cette phase de pré-charge à chaque démarrage du véhicule. Toutefois, pour préserver les modules lors de cette phase de pré-charge, ceux-ci sont utilisés alternativement à chaque mise en marche du véhicule, en fonction d'ordres donnés par l'unité de traitement. Cela permet le fonctionnement de l'unité de stockage d'énergie même lorsqu'un module est déconnecté.

### Connexion des modules

Une fois la phase de pré-charge réalisée, l'unité de traitement commande la connexion des modules au contrôleur de puissance. Le module ayant été utilisé lors de la phase de pré-charge est connecté en premier. Pour connecter ce module, son interrupteur K1 associé est fermé, et son interrupteur K3 associé est ouvert (K2 reste fermé). On effectue ensuite la connexion des autres modules (après temporisation), en fermant les interrupteurs K2 puis K1 pour chacun de ces modules successivement.

Dans le cas d'une unité de traitement comprenant trois modules, les états des interrupteurs commandés sont les suivants lors de la phase de connexion :
- conditions initiales:
   la pré-charge est effective, pas d'alarme "Divergence Tension Pack" (alarme relative à l'écart de tension entre les modules)
- raccordement du premier module :
   ∘ l'interrupteur commandé K1_pack1 est fermé, K2_pack1 reste fermé,
   ∘ l'interrupteur commandé K3_pack1 est ouvert, (le premier module est raccordé) ;
- temporisation lancée par l'unité de traitement, une fois la temporisation terminée, on passe à l'étape suivante,
- raccordement du deuxième module :
   ∘ l'interrupteur commandé K2_pack 2 est fermé, puis
   ∘ l'interrupteur commandé K1_pack2 est fermé (le deuxième module est raccordé),
- temporisation lancée par l'unité de traitement ; une fois la temporisation terminée on passe à l'étape suivante,
- raccordement du troisième module :
   ∘ l'interrupteur commandé K2_pack3 est fermé, puis
   ∘ l'interrupteur commandé K1_pack3 est fermé (le troisième module est raccordé).

On notera que la connexion est bien évidemment effectuée suite à une demande de roulage en provenance du véhicule.

### Phase de roulage

Une fois les trois modules connectés, le véhicule est en phase de roulage. L'unité de traitement mesure un (ou plusieurs) paramètre(s) relatif(s) aux différents modules, comme par exemple :
- la tension électrique aux bornes de chaque module,
- la température de chaque module,
- le courant électrique de chaque module, etc.

Ces valeurs sont comparées à des valeurs de seuil préenregistrées.

Lorsque l'opération de comparaison indique que les valeurs mesurées sont normales, les trois modules restent connectés au contrôleur de puissance.

Toutefois, lorsque les valeurs mesurées ne sont pas normales pour l'un des modules, l'unité de traitement déclare le module en défaut. Dans ce cas, l'unité de traitement enclenche les étapes de limitation de puissance maximale et de déconnexion du module défectueux illustrées à la figure 2.

Dans un premier temps, l'unité de traitement 2 alerte l'utilisateur de la détection d'une anomalie. Pour ce faire, l'unité de traitement 2 envoie un message au superviseur 5 qui relaie l'information sur le premier bus de communication 51 du véhicule pour informer l'utilisateur par le biais d'un voyant situé sur le tableau de bord du véhicule par exemple et/ou d'une alarme sonore.

Une fois l'alerte effectuée, l'unité de traitement 2 lance un minuteur (ou compteur de temps) de quelques secondes (par exemple 1 minute) pour laisser à l'utilisateur le temps de se mettre sur le côté ou dans un endroit adapté (sur la file de droite s'il est sur l'autoroute, etc.).

Lorsque l'intervalle de temps mesuré par le minuteur est expiré, l'unité de traitement commande le contrôleur de puissance pour diminuer la valeur de la puissance maximale accordable au moteur (puissance de seuil du contrôleur de puissance). Ainsi, la demande de puissance effectuée par l'utilisateur est diminuée progressivement et ne dépend plus des agissements de l'utilisateur lorsque celui-ci demande une puissance supérieure à la puissance maximale.

L'unité de traitement mesure également la valeur d'un paramètre de déconnexion lié à la puissance demandée par le moteur (telle que la vitesse du véhicule ou l'intensité du variateur ou du moteur, par exemple). Une fois la valeur du paramètre de déconnexion inférieure à une valeur de consigne, l'unité de traitement - qui obtient cette information depuis le premier bus de communication du véhicule (par exemple, vitesse du véhicule) ou des capteurs de mesure de l'unité de stockage d'énergie électrique - commande la déconnexion du module défectueux.

Pour ce faire, l'unité de traitement commande l'ouverture des interrupteurs K1 et K2 du module défectueux. Il n'y a pas de vérification supplémentaire à faire, car du fait de la diminution de la puissance maximale accordable au moteur, le courant électrique Ipack traversant le contrôleur de puissance est inférieur à une valeur de seuil qui permet la déconnexion du module défectueux sans encombre.

Une fois le module défectueux déconnecté, l'unité de traitement commande l'ouverture de l'interrupteur K4, ce qui correspond à un état sûr puisque tous les interrupteurs commandés du module défectueux sont ouverts. Cette configuration n'est pas conforme à la configuration d'arrêt classique lors de laquelle K4 reste fermé pour garder le module à une température adaptée.

Une fois cette étape effectuée, l'unité de traitement en informe le conducteur via le superviseur en communiquant avec le premier bus de communication du véhicule et rétablit le fonctionnement normal du contrôleur de puissance en augmentant progressivement la puissance maximale accordée par les modules.

Avantageusement, l'unité de traitement peut stocker en mémoire les informations sur le module défectueux. Ceci permet d'éviter que le module défectueux ne soit reconnecté au véhicule lors d'un allumage suivant de celui-ci.

Dans un mode de réalisation, l'unité de traitement peut être programmée pour déterminer une catégorie d'anomalie du module défectueux. Notamment, l'unité de traitement peut être programmée pour déterminer si l'anomalie du module défectueux est :
- une anomalie résorbable, comme par exemple dans le cas d'une charge insuffisante du module, ou
- une anomalie non résorbable, comme par exemple la dégradation d'un composant constituant le module défectueux.

En fonction de la catégorie de l'anomalie, l'unité de traitement peut être programmée pour effectuer diverses actions. Par exemple :
- dans le cas d'une anomalie résorbable, l'unité de traitement peut être programmée pour déterminer si le module défectueux peut être reconnecté au véhicule lors d'un démarrage ultérieur de celui-ci,
- dans le cas d'une anomalie non résorbable, l'unité de traitement peut être programmée pour émettre sur le premier bus de communication CAN du véhicule une information destinée à l'utilisateur et l'informant de la nécessité de renvoyer le véhicule en maintenance.

L'homme du métier aura compris que de nombreuses modifications peuvent être apportées au procédé et au système décrit précédemment sans sortir matériellement des nouveaux enseignements et des avantages décrits ici.

Par exemple, l'unité de traitement peut être ou intégrée ou séparée de l'unité de stockage d'énergie électrique. De même, cette unité de traitement peut être intégrée ou séparée du superviseur. D'autre part, certaines fonctions réalisées par l'unité de traitement peuvent être mises en oeuvre dans le contrôleur de puissance.

## Revendications

1. Procédé de contrôle du fonctionnement de l'alimentation électrique d'un véhicule (3) à moteur électrique, ce véhicule (3) comprenant :
- au moins deux modules de stockage d'énergie (11) connectés en parallèle, lesdits modules (11) étant aptes à fournir au moteur électrique (4) du véhicule, une puissance électrique délivrée comprise entre une puissance minimale prédéterminée et une puissance maximale prédéterminée,
- un contrôleur de puissance (12) permettant de contrôler la puissance délivrée par les modules (11) en fonction de la puissance requise par l'utilisateur du véhicule, et
- une unité de traitement (2) permettant de réaliser le diagnostic desdits modules (11) et de piloter ledit contrôleur de puissance (12),
ce procédé comprenant les étapes de :
- détection (100, 110) d'une anomalie de fonctionnement d'au moins un module défectueux, par ladite unité de traitement (2),
**ce procédé étant caractérisé en ce que** le contrôleur de puissance (12) comprend un condensateur monté en parallèle d'un variateur de la puissance envoyée audit moteur électrique, et **en ce que** ledit procédé comprend également les étapes suivantes, réalisées après ladite étape de détection :
- de commande (120, 130) de ladite unité de traitement (2) de façon qu'elle agisse sur ledit contrôleur de puissance (12), pour diminuer la puissance maximale fournie par les modules au moteur électrique, tout en conservant celle-ci strictement supérieure à une puissance nulle, ladite puissance maximale dudit contrôleur de puissance (12) correspondant à une puissance de seuil du contrôleur,
- de déconnexion (140) électrique de chaque module défectueux, après l'étape de diminution de la puissance maximale mise en oeuvre par ledit contrôleur de puissance (12).

2. Procédé de contrôle selon la revendication 1, dans lequel l'étape de diminution de la puissance comprend les sous-étapes consistant à :
- commander la diminution de la puissance maximale pouvant être fournie par les modules (11), puis
- attendre une période de temps prédéterminée avant la mise en oeuvre de l'étape de déconnexion.

3. Procédé de contrôle selon la revendication 1, dans lequel l'étape de diminution de la puissance comprend les sous-étapes consistant à :
- commander la diminution de la puissance maximale pouvant être fournie par les modules (11), puis
- acquérir au moins un paramètre lié à la puissance du moteur (4),
- vérifier que ledit et au moins un paramètre satisfait un critère de diminution de puissance :
∘ si ledit critère de diminution de puissance est satisfait, alors mettre en oeuvre l'étape de déconnexion,
∘ sinon, retourner à l'étape d'acquisition dudit et au moins un paramètre lié à la puissance du moteur (4).

4. Procédé de contrôle selon l'une quelconque des revendications précédentes, dans lequel l'étape de détection comprend, pour chaque module (11), les sous-étapes suivantes :
- acquérir (100) au moins un paramètre représentatif de caractéristiques du module (11) considéré, et
- pour au moins un paramètre, comparer (110) la valeur du paramètre à au moins une valeur seuil prédéterminée pour identifier une éventuelle anomalie de fonctionnement du module (11) considéré.

5. Procédé de contrôle selon l'une quelconque des revendications précédentes, lequel comprend en outre une étape (160) selon laquelle l'unité de traitement (2) agit sur le contrôleur de puissance (12) pour qu'il augmente la valeur de la puissance maximale pouvant être fournie par les modules (11), cette étape d'augmentation étant mise en oeuvre après l'étape de déconnexion.

6. Procédé de contrôle selon l'une quelconque des revendications précédentes, lequel comprend en outre une étape de transmission d'un signal d'alerte à un avertisseur sonore ou visuel du véhicule (3) pour informer l'utilisateur de l'anomalie et/ou de la déconnexion.

7. Procédé de contrôle selon l'une quelconque des revendications précédentes, dans lequel l'étape de diminution de la puissance consiste à faire décroître en continu la puissance maximale pouvant être fournie par les modules (11), de sorte que la variation de puissance maximale soit progressive, notamment linéaire.

8. Procédé de contrôle selon l'une quelconque des revendications précédentes, lequel comprend en outre une étape d'attente d'une durée prédéterminée entre l'étape de détection et l'étape de diminution.

9. Procédé de contrôle selon l'une quelconque des revendications précédentes, comprenant en outre, lors d'au moins un démarrage du véhicule (3), une étape de pré-charge du contrôleur de puissance (12), ladite étape de pré-charge comportant la connexion électrique du contrôleur de puissance (12) à un module (11) donné de sorte à augmenter la tension aux bornes du contrôleur de puissance (12) préalablement à sa connexion à l'ensemble des modules.

10. Procédé de contrôle selon la revendication précédente, dans lequel l'étape de pré-charge comprend une sous-étape consistant à sélectionner un module donné (11) différent à chaque démarrage du véhicule (3).

11. Procédé de contrôle selon la revendication précédente, dans lequel l'étape de pré-charge comprend, préalablement à la sous-étape de sélection d'un module donné (11) différent, une sous-étape consistant à déterminer un groupe de modules (11) détectés défectueux lors de démarrage précédent du véhicule, la sous-étape de sélection consistant à sélectionner un module donné parmi les modules n'appartenant pas au groupe de modules détectés défectueux.

12. Procédé de contrôle selon l'une quelconque des revendications précédentes, dans lequel au moins un module de stockage d'énergie (11) comprend une pluralité de cellules élémentaires de batterie reliées en série.

13. Système de contrôle du fonctionnement de l'alimentation électrique d'un véhicule (3) à moteur électrique (4) comprenant au moins deux modules (11) de stockage d'énergie connectés en parallèle, lesdits modules étant aptes à fournir au moteur (4) une puissance électrique délivrée comprise entre une puissance minimale prédéterminée et une puissance maximale prédéterminée, ce système comprenant :
- une unité de traitement (2) permettant de détecter une anomalie de fonctionnement d'au moins un module (11) défectueux, et de déconnecter chaque module défectueux,
- un contrôleur de puissance (12) permettant de contrôler la puissance délivrée par les modules en fonction de la puissance requise par l'utilisateur du véhicule, ce système étant **caractérisé en ce que** la puissance maximale correspond à une puissance de seuil du contrôleur, ce contrôleur de puissance (12) comprenant un condensateur monté en parallèle d'un variateur de la puissance envoyée audit moteur électrique,
et **en ce que** ladite unité de traitement (2) permet de piloter ledit contrôleur de puissance (12) notamment pour diminuer la puissance maximale fournie par les modules au moteur électrique, tout en conservant celle-ci strictement supérieure à une puissance nulle.

## Patentansprüche

1. Verfahren zur Steuerung der Funktionsweise der elektrischen Versorgung eines Fahrzeugs (3) mit Elektromotor, wobei dieses Fahrzeug (3) umfasst:
- mindestens zwei parallel verbundene Energiespeichermodule (11), wobei die Module (11) imstande sind, dem Elektromotor (4) des Fahrzeugs eine bereitgestellte elektrische Leistung zu liefern, die zwischen einer vorher festgelegten minimalen Leistung und einer vorher festgelegten maximalen Leistung liegt,
- einen Leistungscontroller (12), der erlaubt, in Abhängigkeit von der vom Benutzer des Fahrzeugs angeforderten Leistung die von den Modulen (11) bereitgestellte Leistung zu steuern, und
- eine Verarbeitungseinheit (2), die erlaubt, die Diagnose der Module (11) durchzuführen und den Leistungscontroller (12) zu steuern,
wobei dieses Verfahren die Schritte umfasst:
- Ermitteln (100, 110) einer Funktionsanomalie mindestens eines defekten Moduls durch die Verarbeitungseinheit (2),
wobei dieses Verfahren **dadurch gekennzeichnet ist, dass** der Leistungscontroller (12) einen Kondensator umfasst, der parallel zu einem Regler der an den Elektromotor geschickten Leistung montiert ist, und dass das Verfahren ebenfalls die folgenden Schritte umfasst, die nach dem Ermittlungsschritt durchgeführt werden:
- Steuern (120, 130) der Verarbeitungseinheit (2) derart, dass sie auf den Leistungscontroller (12) einwirkt, um die von den Modulen an den Elektromotor gelieferte maximale Leistung zu verringern, bei Beibehaltung derselben über einer Leistung von Null, wobei die maximale Leistung des Leistungscontrollers (12) einer Grenzleistung des Controllers entspricht,
- elektrisches Trennen (140) jedes defekten Moduls nach dem von dem Leistungscontroller (12) durchgeführten Verringerungsschritt der maximalen Leistung.

2. Steuerungsverfahren nach Anspruch 1, wobei der Verringerungsschritt der Leistung die Unterschritte umfasst, die darin bestehen:
- Befehlen der Verringerung der maximalen Leistung, die von den Modulen (11) lieferbar ist, dann
- Abwarten eines vorher festgelegten Zeitraums vor der Durchführung des Trennschritts.

3. Steuerungsverfahren nach Anspruch 1, wobei der Verringerungsschritt der Leistung die Unterschritte umfasst, die darin bestehen:
- Befehlen der Verringerung der maximalen Leistung, die von den Modulen (11) lieferbar ist, dann
- Erfassen mindestens eines mit der Leistung des Motors (4) verbundenen Parameters,
- Überprüfen, dass der mindestens eine Parameter ein Leistungsverringerungskriterium erfüllt:
∘ wenn das Leistungsverringerungskriterium erfüllt ist, dann Durchführen des Trennschritts,
∘ wenn nicht, Zurückkehren zum Erfassungsschritt des und mindestens einen mit der Leistung des Motors (4) verbundenen Parameters.

4. Steuerungsverfahren nach einem der vorangehenden Ansprüche, wobei der Ermittlungsschritt für jedes Modul (11) die folgenden Unterschritte umfasst:
- Ermitteln (100) mindestens eines für Merkmale des betroffenen Moduls (11) repräsentativen Parameters, und
- für mindestens einen Parameter, Vergleichen (110) des Wertes des Parameters mit mindestens einem vorher festgelegten Grenzwert, um eine eventuelle Funktionsanomalie des betroffenen Moduls (11) zu identifizieren.

5. Steuerungsverfahren nach einem der vorangehenden Ansprüche, das ferner einen Schritt (160) umfasst, gemäß dem die Verarbeitungseinheit (2) auf den Leistungscontroller (12) einwirkt, damit er den Wert der maximalen Leistung erhöht, der von den Modulen (11) lieferbar ist, wobei dieser Erhöhungsschritt nach dem Trennschritt durchgeführt wird.

6. Steuerungsverfahren nach einem der vorangehenden Ansprüche, das ferner einen Übertragungsschritt eines Warnsignals an eine akustische oder visuelle Warneinrichtung des Fahrzeugs (3) umfasst, um den Benutzer über die Anomalie und/oder die Trennung zu informieren.

7. Steuerungsverfahren nach einem der vorangehenden Ansprüche, wobei der Verringerungsschritt der Leistung in einem kontinuierlichen Absenken der von den Modulen (11) lieferbaren maximalen Leistung derart besteht, dass die maximale Leistungsvariation schrittweise, vor allem linear, erfolgt.

8. Steuerungsverfahren nach einem der vorangehenden Ansprüche, das ferner einen Warteschritt einer vorher festgelegten Dauer zwischen dem Ermittlungsschritt und dem Verringerungsschritt umfasst.

9. Steuerungsverfahren nach einem der vorangehenden Ansprüche, umfassend ferner, bei mindestens einem Starten des Fahrzeugs (3), einen Vorladeschritt des Leistungscontrollers (12), wobei der Vorladeschritt einen elektrischen Anschluss des Leistungscontrollers (12) an ein bestimmtes Modul (11) derart aufweist, dass die Spannung an den Klemmen des Leistungscontrollers (12) vor seinem Anschluss an die Gesamtheit der Module erhöht wird.

10. Steuerungsverfahren nach vorangehendem Anspruch, wobei der Vorladeschritt einen Unterschritt umfasst, der darin besteht, bei jedem Starten des Fahrzeugs (3) ein unterschiedliches bestimmtes Modul (11) auszuwählen.

11. Steuerungsverfahren nach vorangehendem Anspruch, wobei der Vorladeschritt vor dem Unterschritt der Auswahl eines unterschiedlichen bestimmten Moduls (11) einen Unterschritt umfasst, der darin besteht, eine beim vorangehenden Starten des Fahrzeugs als defekt ermittelte Gruppe von Modulen (11) zu ermitteln, wobei der Auswahlunterschritt darin besteht, aus den Modulen, die nicht zu der Gruppe von als defekt ermittelten Modulen gehören, ein bestimmtes Modul auszuwählen.

12. Steuerungsverfahren nach einem der vorangehenden Ansprüche, wobei mindestens ein Energiespeichermodul (11) eine Vielzahl in Reihe verbundene elementare Batteriezellen umfasst.

13. System zur Steuerung der Funktionsweise der elektrischen Versorgung eines Fahrzeugs (3) mit Elektromotor (4), umfassend mindestens zwei parallel verbundene Energiespeichermodule (11), wobei die Module (11) imstande sind, dem Motor (4) eine bereitgestellte elektrische Leistung zu liefern, die zwischen einer vorher festgelegten minimalen Leistung und einer vorher festgelegten maximalen Leistung liegt, wobei dieses System umfasst:
- eine Verarbeitungseinheit (2), die erlaubt, eine Funktionsanomalie mindestens eines defekten Moduls (11) zu ermitteln und jedes defekte Modul zu trennen,
- einen Leistungscontroller (12), der erlaubt, in Abhängigkeit von der vom Benutzer des Fahrzeugs angeforderten Leistung die von den Modulen bereitgestellte Leistung zu steuern, wobei dieses System **dadurch gekennzeichnet ist, dass** die maximale Leistung einer Grenzleistung des Controllers entspricht, wobei dieser Leistungscontroller (12) einen Kondensator umfasst, der parallel zu einem Regler der an den Elektromotor geschickten Leistung montiert ist,
und dass die Verarbeitungseinheit (2) erlaubt, den Leistungscontroller (12) vor allem derart zu steuern, um die von den Modulen an den Elektromotor gelieferte maximale Leistung zu verringern, bei Beibehaltung derselben über einer Leistung von Null.

## Claims

1. A method for controlling the operation of the electric power supply of an electric motor vehicle (3), this vehicle (3) comprising:
- at least two energy storage modules (11) connected in parallel, said modules (11) being able to provide the vehicle electrical motor with delivered electric power comprised between a predetermined minimum power and a predetermined maximum power,
- a power controller (12) allowing control of the power delivered by the modules (11) depending on the power required by the vehicle user,
- a processing unit (2) allowing the diagnostic of the modules (11) and the control of the power controller (12),
this method comprising the steps of detecting (100, 110) an operation anomaly of at least one defective module, by said processing unit (2),
this method being **characterized in that** this power controller (12) comprises a capacitor mounted in parallel on a variable power control of the power sent to said electrical motor and **in that** said method also comprises the following steps, realized after said detection step:
- of control (120, 130) of said processing unit (2) so that said unit acts on said power controller (12), for reducing the maximum power provided by the modules to the electric motor while keeping this strictly greater than zero power, said maximum power of said power controller (12) corresponding to a threshold power of the controller,
- electrically disconnecting (140) each defective module, the disconnection step being applied after the reduction step of the maximum power applied by said power controller (12).

2. The control method according to claim 1, wherein the power reduction step comprises sub-steps for:
- controlling the reduction in the maximum power which may be provided by the modules (11), and then
- waiting for a predetermined period of time before applying the disconnection step.

3. The control method according to claim 1, wherein the power reduction step comprises sub-steps for:
- controlling the reduction in the maximum power which may be provided by the modules (11), and then
- acquiring at least one parameter related to the power of the motor (4),
- checking that said and at least one parameter meets a power reduction criterion:
∘ if said power reduction criterion is met, then applying the disconnection step,
∘ otherwise, returning to the step for acquiring said and at least one parameter related to the power of the motor (4).

4. The control method according to any one of the preceding claims, wherein the detection step comprises, for each module (11), the following sub-steps for:
- acquiring (100) at least one parameter representative of characteristics of the relevant module (11), and
- for at least one parameter, comparing (110) the value of the parameter with at least one predetermined threshold value in order to identify a possible operating anomaly of the relevant module (11).

5. The control method according to any one of the preceding claims, which further comprises a step (160) according to which the processing unit (2) acts on the power controller (12) for increasing the value of the maximum power which may be provided by the modules (11), said increase step being applied after the disconnection step.

6. The control method according to any one of the preceding claims, which further comprises a step for transmitting an alert signal to an audible or visible alarm of the vehicle (3) for informing the user on the anomaly and/or on the disconnection.

7. The control method according to any one of the preceding claims, wherein the power reduction step consists of continuously decreasing the maximum power which may be provided by the modules (11), so that the maximum power variation is gradual, notably linear.

8. The control method according to any one of the preceding claims, which further comprises a step for waiting for a predetermined period between the detection step and the reduction step.

9. The control method according to any one of the preceding claims, further comprising, during at least one starting of the vehicle (3), a step for pre-charging the power controller (12), said pre-charging step including the electric connection of the power controller (12) to a given module (11) so as to increase the voltage on the terminals of the power controller (12) before its connection to the assembly of modules.

10. The control method according to the preceding claim, wherein the pre-charging step comprises a sub-step consisting of selecting a different given module (11) at each starting of the vehicle (3).

11. The control method according to the preceding claim, wherein the pre-charging step comprises, prior to the sub-step for selecting a different given module (11), a sub-step consisting of determining a group of defective detected modules (11) during the previous starting of the vehicle, the selection sub-step consisting of selecting a given module from among the modules not belonging to the group of defective detected modules.

12. The control method according to any one of the preceding claims, wherein at least one energy storage module (11) comprises a plurality of elementary battery cells connected in series.

13. A system for controlling the operation of the electric power supply of a vehicle (3) with an electric motor (4) comprising at least two energy storage modules (11) connected in parallel, said modules being able to provide the motor (4) with a delivered electric power comprised between a predetermined minimum power and a predetermined maximum power, this system comprising :
- a processing unit (2) allowing the detection of an operation anomaly of at least one defective module (11) and the disconnection of each defective module,
- a power controller (12) allowing control of the power delivered by the modules depending on the power required by the vehicle user,
this system being **characterized in that** the maximum power corresponds to a threshold power of the controller, this power controller (12) comprising a capacitor mounted in parallel on a variable power control of the power sent to said electrical motor and **in that** said processing unit (2) allows control of said power control (12) notably for reducing the maximum power provided by the modules to the electrical motor, while keeping this one strictly greater than zero power.
